# EUROPÄISCHE PATENTANMELDUNG

(11) **EP 1 186 551 A2**
(43) Veröffentlichungstag der Anmeldung: **13.03.2002**
(21) Anmeldenummer: 01119976.7
(22) Anmeldetag: 18.08.2001
(51) Int. Cl.: B65D 77/04, G09B 19/00

(54) **System zum Darreichen von speisefertig verpackten Nahrungsmitteln, welche gemäss eines Speiseplans in einer Verpackung zusammengefasst sind**

(30) Priorität: 02.09.2000 DE 10043381
(71) Anmelder: Kampka, Karl, 90765 Fürth (DE)
(72) Erfinder: Kampka, Biljana, 90765 Fürth (DE); Kampka, Karl, 90765 Fürth (DE)

(57) **Zusammenfassung**

Das erfindungsgemäße System zum Darreichen von portioniert verpackten Nahrungsmitteln erleichtert dem kalorienbewußten Konsumenten die Speiseplanung, indem er die Nahrungsmittel einem Verpackungsgebinde in der Folge der Mahlzeiten eines Tages mit z.B. Kalorienangabe zu den einzelnen Mahlzeiten und gegebenenfalls auch ihren Gängen entnimmt. Statt dessen oder zusätzlich kann auch die Angabe von Vitaminen und / oder Spurenelementen vorgesehen sein, um etwaigen Mangelerscheinungen bewußt vorbeugen zu können. So kann ein Speiseplan für mehrerer Tage etwa bei einem Tiefkühl-Hausdienst katalogmäßig unter Beachtung von gewünschten Grenzvorgaben zusammengestellt und vollzogen werden, ohne daß es zu Verschwendung von Nahrungsmitteln aufgrund verdorbener Reste nach Entnahme nur kleiner Portionen aus größeren Verkaufseinheiten kommt.

## Beschreibung

Die Erfindung betrifft ein System gemäß dem Oberbegriff des Anspruches 1.

Das ist aus der FR 2 176 569 A1 als System von Rationspaketen bekannt, die für die Gänge von kompletten Menüs pro Mahlzeit über eine bestimmte Zeitspanne nach Maßgabe einer Verordnung etwa kaloriengezielt bestückt und entsprechend beschriftet sind. Speziell mit den Inhalten abgepackter therapeutischer Mahlzeiten für Diätpatienten befaßt sich die US 6,039,989 A.

Über die Darreichungs- oder Verwendungsform ist jener extrem knappen gattungsbildenden Veröffentlichung nichts zu entnehmen. Man denkt deshalb unwillkürlich an die Verpflegungsgewohnheiten insbesondere an Bord von Touristenflügen, in einem strukturierten Tablett Aufnahmen für die verschiedenen Gänge einer Mahlzeit vorzusehen. Die in diese Aufnahmen speisefertig eingelegten Lebensmittel werden mitsamt dem Tablett hygienisch aber leicht zu öffnen verpackt. Das ermöglicht eine rationelle, serienfertigungsfreundliche Vorbereitung, Lagerung und Ausgabe individueller Mahlzeiten.

Im übrigen sind aus dem pharmazeutischen Bereich Dispenser mit geregeltem Zugriff zu einer vorgegebenen Folge von Arzneimitteln bekannt (vgl. US 4,872,559 A), die auch im Lebensmittelbereich anzutreffen sind (DE 42 30 321 A1).

Die vorliegende Erfindung zielt dagegen auf andere Gesichtspunkte ab; nämlich auf eine Erleichterung der Speisegewohnheiten von Mitmenschen, die ihr gesundheitliches Wohlbefinden fördern wollen.

Zwar ist auf industriell verpackten Lebensmitteln zunehmend eine Kalorienangabe anzutreffen. Aber wenn man sich aus separat beschafften Vorräten einen täglichen Speiseplan zusammenstellen soll, dann ist die Kalorienkalkulation doch recht umständlich und fehleranfällig, da von den konkret ausgewählten Nahrungsmitteln und deren Teilmengen abhängig. Hinzu kommt die unwillkürliche Verschwendung von Ressourcen dadurch, saß selten der größere Vorrat in aufeinanderfolgenden kleinen Portionen hinreichend rasch ganz verzehrt wird, weil die zunächst noch übrig bleibenden Reste nach dem Öffnen der Verkaufsverpackung zu rasch verderben oder wenigstens unappetitlich werden; und wer kauft sich schon eine halbe Mohrrübe oder einzelne Salatblätter speziell für die bevorstehende Mahlzeit.

Hier Abhilfe und den Betroffenen eine zuverlässige Erleichterung zu schaffen, ist die technische Problemstellung vorliegender Erfindung

Diese Aufgabe ist gemäß den im Hautanspruch genannten wesentlichen Merkmalen gelöst. Erfindungsgemäß ist demnach vorgesehen, jeweils die Mahlzeiten eines Tages zu einem Verpackungsgebinde kombiniert anzubieten, wobei zweckmäßigerweise zu jeder der so vorbereiteten Mahlzeiten oder sogar ihrer einzelnen Gänge unmittelbar auf deren Verpakkung die maßgeblichen physikalischen Werte wie insbesondere die darin enthaltenen Mengen an Kalorien, Vitaminen, Spurenelementen u.dgl. angegeben sind.

So kann der Konsument im Zuge des Verzehrs der vorbereiteten Mahlzeiten einer Tagesration aktuell einmal etwa auf das zweite Frühstück oder auf das Gebäckstück zum Nachmittagskaffee verzichten und dabei unmittelbar ablesen, z.B. wie viele Kalorien er dadurch gegenüber der normalen Tagesration einspart.

Zweckmäßigerweise kann der Interessent aus einem katalogähnlichen Angebot verschiedener haltbar zubereiteter, standardisierter Tages-Speiseprogramme unterschiedlicher Gesamtgrenzwerte wählen und sich so automatisch unter strenger Sicherung seiner Grenzwert-, z.B. Kalorienvorgaben den Speiseplan für die Folge der Tage einer ganzen Woche oder länger im voraus zusammenstellen, dessen Mahlzeiten ihm dann etwa von einem Tiefkühl-Heimdienst auf Bestellung wöchentlich angeliefert werden. Hinsichtlich etwa der Kalorien hat der Konsument dabei je nach seiner (z.B. büromäßigen oder körperlichen) Tätigkeit die Auswahl zwischen auf die täglichen Mahlzeiten verteilten unterschiedlichen Tagesmengen (etwa von 600, 1000, 1200, 1500 und 2000 Kilokalorien).

Am betreffenden Tag werden jeweils zu gegebener Zeit die einzelnen Mahlzeiten des aktuellen Verpackungsgebindes geöffnet und verzehrt - oder aber übersprungen, um z.B. die darauf angegebenen Kalorien einzusparen.

Die Realisierung ist überhaupt nicht aufwendig. Denn gemäß vorliegender Erfindung können die einzelnen Mahlzeiten eines Tages-Speiseplanes einfach in getrennten die Kalorien - u.dgl. Angaben tragenden Behältnissen wie Beuteln o. dgl. lebensmittelgerecht hygienisch und haltbar verpackt sein, wobei dann diese Beutel gemäß dem Tages-Speiseplan in einem größeren Behältnis oder Beutel zusammengefaßt bereitgehalten werden.

Das erfindungsgemäße System zum Darreichen von portioniert verpackten Nahrungsmitteln erleichtert so auf jeden Fall dem gesundheitsbewußten Konsumenten die Speiseplanung, indem er die Nahrungsmittel einem Verpackungsgebinde in der Folge der Mahlzeiten eines Tages mit z.B. Kalorienangabe zu der jeweiligen Mahlzeit und gegebenenfalls auch ihren einzelnen Gängen entnimmt. So kann ein Speiseplan für mehrerer Tage etwa bei einem Tiefkühl-Hausdienst katalogmäßig unter Beachtung von gewünschten Grenzvorgaben zusammengestellt und vollzogen werden, ohne daß es zu Verschwendung von Nahrungsmitteln aufgrund verdorbener Reste nach Entnahme nur kleiner Portionen aus größeren Verkaufseinheiten kommt.

## Patentansprüche

1. System zum Darreichen von Nahrungsmitteln, die etwa gemäß den Gängen der Mahlzeiten eines Tages portionsweise speisefertig verpackt sind, **dadurch gekennzeichnet, daß** die Portionen in Behältnissen verpackt sind, die gemäß einem Speiseplan in einem größeren Behältnis zusammengefaßt sind.

2. System nach Anspruch 1, **dadurch gekennzeichnet, daß** die Behältnisse Beutel sind.

3. System nach einem der vorangehenden Ansprüche, **dadurch gekennzeichnet, daß** die Behältnisse ihren Inhalten zugeordnete Informationen über darin enthaltene physikalische Werte enthalten.

4. System nach Anspruch 3, **dadurch gekennzeichnet, daß** die Werte Kalorien darstellen.

5. System nach Anspruch 3, **dadurch gekennzeichnet, daß** die Werte Vitamine darstellen.

6. System nach Anspruch 3, **dadurch gekennzeichnet, daß** die Werte Spurenelemente darstellen.
